# EUROPÄISCHE PATENTSCHRIFT

(11) **EP 1 695 048 B1**
(45) Veröffentlichungstag und Bekanntmachung des Hinweises auf die Patenterteilung: **05.11.2008**
(21) Anmeldenummer: 04803964.8
(22) Anmeldetag: 16.12.2004
(51) Int. Cl.: G01G 23/00, G01G 19/44, G01G 19/08

(54) **WÄGEZELLE**
LOAD CELL
CELLULE DE PESAGE

(30) Priorität: 17.12.2003 DE 10359460
(43) Veröffentlichungstag der Anmeldung: 30.08.2006
(73) Patentinhaber: Hottinger Baldwin Messtechnik GmbH, 64293 Darmstadt (DE)
(72) Erfinder: BAÜMEL, Helmut, 64367 Mühltal (DE); RÖHN, Rolf, 64653 Lorsch (DE); VÖLGER, Reinhard, 64846 Gross-Zimmern (DE); WILL, Heinz, Ronald, 64665 Alsbach-Hähnlein (DE)
(74) Vertreter: Behrens, Helmut
(86) Internationale Anmeldenummer: PCT/EP2004/014351
(87) Internationale Veröffentlichungsnummer: WO 2005/059488

(56) Entgegenhaltungen:
- EP-A- 1 193 480
- WO-A-94/25834
- WO-A-03/100362
- DE-A1- 19 715 590
- FR-A- 2 639 111
- JP-A- 2001 255 216

## Beschreibung

Die Erfindung betrifft eine Wägezelle gemäß dem Oberbegriff des Patentanspruchs 1 sowie eine Waage gemäß dem Oberbegriff des Patentanspruchs 8.

Die Wägezellen in Wägeeinrichtungen dienen der Umwandlung einer Gewichtskraft in ein elektrisches Signal, das mit Hilfe elektronischer Auswertevorrichtungen ausgewertet und angezeigt wird. Es gibt ortsfeste Waagen, in der die Wägezellen in einer definierten Lage ortsfest eingebaut sind. Bei geeichten oder anderen genauen ortsfesten Waagen werden diese am Aufstellungsort genau ausgerichtet, damit die Gewichtskraft auch genau in Meßrichtung wirkt. Sind in einer derartigen Waage mehrere Wägezellen angeordnet, so ist wegen eventueller Einbauungenauigkeiten oder anderer Unterschiede häufig noch ein Ecklastabgleich am Aufstellungsort notwendig, um die erforderliche Meßgenauigkeit einzuhalten.

Zur Vermeidung von Verspannungskräften werden auch bei stationären Waagen häufig die Waageplattformen oder andere Gewichtsaufnahmevorrichtungen meist nur lose auf den Wägezellen angeordnet. Dazu sind oft komplizierte sphärische Krafteinleitungselemente notwendig, die sicherstellen sollen, daß alle Gewichtskräfte möglichst in Meßrichtung wirken, um Meßfehler zu vermeiden. Bei derartigen Waagen sind die Wägezellen an einem gemeinsamen Rahmen befestigt, der bei ungleichmäßiger Belastung zu einer Verwindung führen kann, wodurch sich bei fester Montage der Wägezellen deren Ausrichtung ändert. Dies kann nur durch aufwendige Gestaltung der Waagenrahmen oder der Kraftaufnahmeelemente an den Wägezellen kompensiert werden.

Bei größeren beweglichen Wägeplattformen oder bei zur seitlichen Verschiebung neigenden Lastverteilungen werden bei ortsfesten Waagen vorzugsweise Pendelstabwägezellen eingesetzt, die bestimmte sphärische Kraftein- und Kraftausleitungsflächen aufweisen, durch die sich die Wägezellen selbsttätig in die gravimetrische Kraftwirkungsrichtung ausrichten. Dabei kann es bei größeren Wägeplattformen wie z. B. bei Fahrzeugwaagen bei großen Temperaturunterschieden zu unterschiedlichen Wärmeausdehnungen zwischen der Waagenplattform und dem Fundament kommen, wodurch eine selbsttätige Ausrichtung der Pendelstabwägezellen in die senkrechte Kraftwirkungsrichtung unmöglich wird, was zu Meßfehlern bei derartigen Waagen führen kann.

Es gibt aber auch mobil aufstellbare Waagen, wie beispielsweise Ladentischwaagen oder medizinische Waagen zur Personenwägung sowie mobile Waagen zur Aufbauverwiegung an Kraftfahrzeugen. Bei diesen Waagen können deren Wägezellen im Betrieb beträchtliche Schiefstellungen aufweisen, die zu einer Signalabweichung führen, weil die Richtung der Gewichtskraft von der Meßrichtung der Wägezellen abweicht.

Eine derartige Aufbauverwiegung von Gütern auf Fahrzeugen ist aus der DE 199 31 381 A1 bekannt, bei der zwischen der Ladefläche und dem Fahrzeugrahmen eines Lkws vier pendelnd aufgehängte Wägezellenvorrichtungen vorgesehen sind. Durch die pendelnde Aufhängung richten sich die Wägezellen stets selbsttätig in Schwerkraftrichtung aus, so daß die Gewichtskraft stets in Meßrichtung wirkt. Bei dieser Aufbauverwiegung ist auch bei einer gewissen Schiefstellung eine genaue Wägung möglich. Dazu sind aber aufwendige sphärische Lager- und Gegenlagerelemente notwendig, die zur Reibungsverminderung als mit Schmiermitteln versehene Kugellager ausgebildet sind. Da diese Ladefläche während der Fahrt gegenüber dem Rahmen ortsfest fixiert werden muß, sind noch zusätzliche konische Bolzen vorgesehen, durch die die Ladefläche lösbar mit dem Rahmen zu verbinden ist. Eine derartige pendelnde Aufhängung ist aufgrund der speziellen Lagerung aufwendig und ist aus konstruktiven Gründen bei den meisten Waagen nicht einsetzbar, bei denen Schrägstellungen vorkommen können, so daß nicht immer eine selbsttätige Ausrichtung zur Verbesserung der Meßgenauigkeit ausführbar ist.

Aus der EP 0 832 42C B1 ist eine Waage zur Ermittlung der Gewichtsbelastung auf der Hubfläche eines Gabelstaplers bekannt. Dabei ist zwischen der Hubfläche und einem vertikalen festen Rahmen am Gabe-stapler ein Zwischenrahmen vorgesehen, der mindestens über vier Kraftaufnehmer am festen Rahmen befestigt ist. Bei senkrechter vertikaler Stellung des Zwischen- oder Hubrahmens erfassen die Kraftaufnehmer die auf der auskragenden Hubfläche befindliche Gewichtsbelastung in Meßrichtung, so daß damit eine genaue Gewichtsermittlung möglich ist. Da ein derartiger Gabelstapler seinen Hubrahmen nach vorne und hinten neigen kann und teilweise auch auf seitlich schiefem Untergrund steht, ist zwischen dem Hubrahmen bzw. Zwischenrahmen ein Verbindungskasten vorgesehen, der zur Verbindung der Kraftaufnehmer dient und zwei Neigungsaufnehmer enthält, die die Schiefstellung beider Raumachsen des Zwischenrahmens erfassen sollen. Die Neigungsaufnehmer erfassen dabei die Winkelabweichung zur vertikalen Schwerkraftrichtung und errechnen daraus mit Hilfe von trigonometrischen Gleichungen eine korrigierte Gewichtskraft. Allerdings kann es bei einer ungenauen Einbaulage der Neigungsaufnehmer oder der Kraftaufnehmer als auch bei einer mechanischen Verwindung des Zwischenrahmens zu einer fehlerhaften Neigungserfassung kommen, die zu einem Meßfehler bei der Gewichtsermittlung führt.

Eine Wägevorrichtung zur waagerecht ausgerichteten Verwiegung einer Last ist aus der WO-A-9425834 bekannt, die als Plattformwaage ausgebildet ist. Dabei ist zwischen einer Wiegeplattform und einer Abstützplattform eine Biegebalkenwägezelle angeordnet. Die Wägezelle enthält einen Kraftaufnahmeteil, der mit einem Fußteil an der Abstützplattform befestigt ist. Axial gegenüber liegend enthält die Wägezelle ein Krafteinleitungselement, das nach oben mit der Wiegeplattform verbunden ist. Zwischen den Krafteinleitungs- und Kraftaufnahmeelement ist offensichtlich ein Dehnungskörper angeordnet, an dem Dehnungsmessstreifen appliziert sind, dessen Messsignale über eine Anschlussleitung einer separaten elektronischen Auswertevorrichtung zugeführt werden. Um ein lagegenaues Gewichtssignal zu erhalten, enthält die Plattformwaage zusätzlich noch ein Neigungsaufnehmer, der offensichtlich die Abweichung von der waagerechten Ausrichtung der Abstütz- oder Wägeplattform erfasst und zur genauen Gewichtsermittlung bei einer möglichen Abweichung dient. Dabei handelt es sich offensichtlich um einen herkömmlichen Neigungsaufnehmer mit einer Pendelmasse oder mit einer Widerstandsänderung bei einer Flüssigkeitsverlagerung, der bei einer Ausführungsform parallel neben der Wägezelle angeordnet ist und bei einer anderen Ausführungsform als Verlängerung des Kraftaufnahmeelements direkt mit der Wägezelle verbunden ist. Dabei dient die funktionale Verbundenheit des Neigungsaufnehmers in der Verlängerung des Kraftaufnahmeelements der vereinfachten Herstellung und der Verringerung der Kosten der Plattformwaage. Durch die integrale Verbindung der ursprünglichen Biegebalkenwägezellen mit einem herkömmlichen Neigungsaufnehmer verlängert sich allerdings die Wägezelle, so dass dafür ein größerer Bauraum notwendig ist. Auch wenn dafür eine separate Gehäuseeinheit eingespart wird, muss diese als Verlängerungseinheit an den bisherigen Biegebalkenaufnehmer angepasst werden, so dass eine einfache Integration in andere Bauausführungen nur schwer möglich ist.

Aus der JP 2001-255216 sind auch bereits Wägezellen mit fest an diesen angeordneten Neigungsaufnehmern bekannt. Dazu sind ringförmige Neigungsaufnehmer vorgesehen, die mindestens zwei Ringelektroden besitzen, zwischen denen ein Fluid als Dielektrikum angeordnet ist. Diese ringförmigen Neigungsaufnehmer sind dabei um oder an einem rotationssymmetrischen Krafteinleitungs- oder Kraftaufnahmeteil der Wägezellen befestigt. Weicht nun die Wägezelle bei einer Schrägstellung von ihrer Schwerkraftlinie ab, so verändert sich auch die Dielektrizitätskonstante zwischen den Elektroden in Abhängigkeit der Neigung. Durch die so erfasste Neigungsänderung wird mittels einer elektronischen Rechenschaltung das erfasste Messsignal um der. Neigungsfehler korrigiert oder verworfen. Derartige ringförmige kapazitive Neigungsaufnehmer eignen sich im Grunde nur für rotationssymmetrische Wägezellen, da nur diese über runde Krafteinleitungs- oder Kraftaufnahmeteile verfügen, die zur waagerechten Befestigung der ringförmigen Neigungsaufnehmer geeignet sind. Da derartige Wägezellen je nach Wägezellentype unterschiedlich große Krafteinleitungs- oder Kraftaufnahmeteile besitzen, müssen für jede mit Neigungsaufnehmern auszustattende Wägezellentype auf deren Abmessungen abgestimmte Neigungsaufnehmer bereitgehalten werden. Ein derartiger Aufwand ist daher in der Praxis nur für hochwertige Wägezellenausführungen wirtschaftlich vertretbar.

Der Erfindung liegt daher die Aufgabe zugrunde, eine Wägevorrichtung oder deren messrelevante Bauelement so zu verbessern, dass neigungsbedingte Messfehler sowohl bei rotationssymmetrischen als auch bei Biegebalkenwägezellen und anderen Ausführungsarten ohne großen herstellung- und Montageaufwand weitgehend vermieden oder korrigiert werden.

Diese Aufgabe wird durch die in Patentanspruch 1 und 8 angegebene Erfindung gelöst. Weiterbildungen und vorteilhafte Ausführungsbeispiele der Erfindung sind in den abhängigen Ansprüchen angegeben.

Die Erfindung hat den Vorteil, daß durch die integrierten Neigungsaufnehmer stets eine Abweichung zwischen der Gewichtskraftrichtung und der Meßrichtung in jeder Wägezelle berücksichtigt wird. Dies ist insbesondere vorteilhaft, wenn nur einzelne Wägezellen aufgrund spezieller Belastungen oder Verwindungen in eine unzulässige Schiefstellung geraten können. Die Schiefstellung von mindestens einer Wägezelle kann vorteilhaft zum Abbruch des Wägevorgangs oder auch zur Neigungskompensation durch eine Korrekturrechnung genutzt werden, um eine vorgegebene Meßgenauigkeit zu gewährleisten. Insbesondere bei mobilen Waagen hat eine einfache Wägeunterbrechung den Vorteil, daß nicht für jeden Wägevorgang eine aufwendige Ausrichtung der Waage erfolgen muß, sondern durch eine einfache Ortsveränderung meist ein waagerechter Standort erreichbar ist.

Durch die rechnerische Neigungskompensation können vorteilhafterweise auch Wägungen bei festgestellten Schiefstellungen einzelner oder aller Wägezellen durchgeführt werden, auch wenn die einzelnen Wägezellen unterschiedliche Neigungsausrichtungen aufweisen. Insbesondere können dadurch auch Schiefstellungen von Pendelstabwägezellen oder anderen Wägezellen bei Fahrzeugwaagen festgestellt und kompensiert werden, die aufgrund ungleichmäßiger Wärmeausdehnungswirkungen entstehen, obgleich die Waage oder deren Waagenplattform in ihrer Lage waagerecht ausgerichtet bleibt.

Die Erfindung einer neigungskompensierten Wägezelle hat gleichzeitig den Vorteil, daß die notwendigen Abstützrahmen in den Waagen nur geringfügige Verwindungssteife aufweisen müssen, so daß dadurch auf einfache Weise Gewicht und Kosten eingespart werden können. Bei ausrichtbaren mobilen Waagen kann die erfindungsgemäße Neigungsermittlung an mindestens einer Wägezelle auch vorteilhaft zur Ausrichtung der Waage selbst verwandt werden. Dies hat gleichzeitig den Vorteil, daß mindestens die Wägezellen als meßwertrelevante Bauteile einer Waage in Schwerkraftrichtung ausgerichtet sind, wodurch eine hohe Meßgenauigkeit erzielbar ist.

Durch die Integration der Neigungsaufnehmer in die einzelnen Wägezellen ist vorteilhafterweise ohne zusätzlichen Bauraum und ohne störungsbehaftete Verdrahtung eine Verbesserung der Meßgenauigkeit erzielbar. Durch die Integration der Neigungsaufnehmer in den Wägezellen ist im Störungsfall auf einfache Weise auch ein Austausch der einzelnen Wägezellen durchführbar, ohne daß ein aufwendiger Abgleich der gesamten Waage oder insbesondere ein Ecklastabgleich erforderlich wäre.

Die Erfindung wird anhand eines Ausführungsbeispiels, das in der Zeichnung dargestellt ist, näher erläutert. Es zeigen:
- Fig. 1:: einen Doppelbiegebalken mit integriertem Neigungsaufnehmer, und
- Fig. 2:: eine schematische Vektordarstellung der Kraftwirkungen an einer geneigten Pendelstabwägezelle.

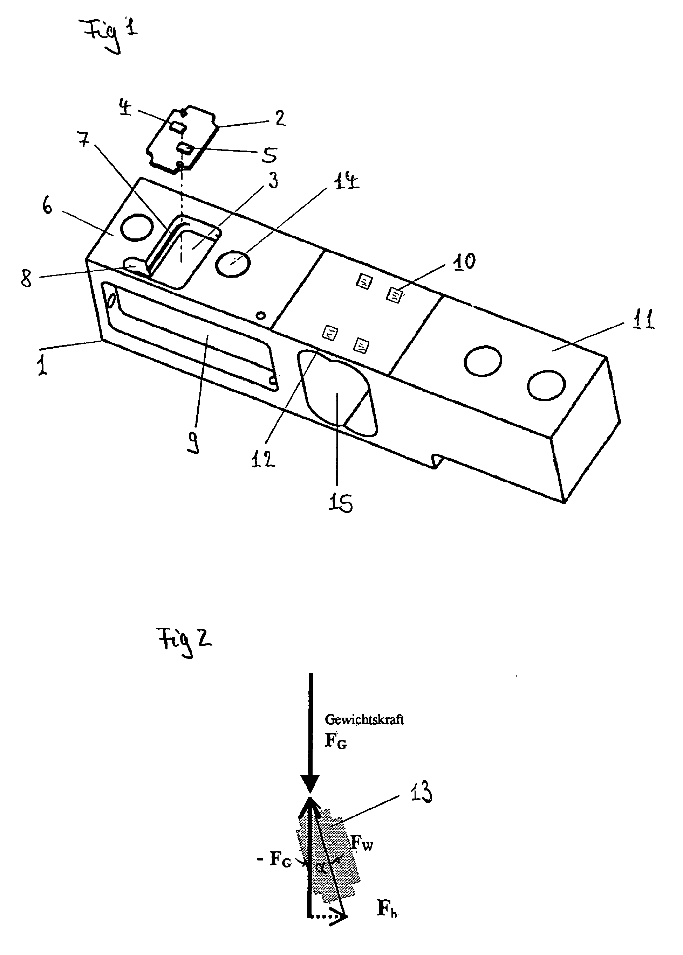

In Fig. 1 der Zeichnung ist eine Wägezelle dargestellt, die als Doppelbiegebalken 1 ausgebildet ist und in einer ausgefrästen Ausnehmung 3 eine Schaltplatine 2 enthält, auf der ein mikroelektromechanischer Neigungsaufnehmer 4 aufgelötet ist.

Bei dem Doppelbiegebalken 1 handelt es sich um eine Wägezelle, die zum Einsatz in eine Patientenliftwaage vorgesehen ist.

Derartige Patientenliftwaagen werden in medizinischen Einrichtungen zum Verwiegen von Patienten benutzt, die mit ihren Liege- oder Sitzmöbeln genau verwogen werden müssen. Bei derartigen Wägevorrichtungen sind Meßgenauigkeiten von 0,1 % gefordert, deren Einhaltung auch von einer exakten Ausrichtung der Waage abhängt. Da derartige Wägevorrichtungen in den Krankenpflegeeinrichtungen zu den Patienten verfahrbar sein sollen, sind nicht immer genaue waagerechte Aufstellflächen in den verschiedenen Behandlungsräumen gewährleistet, wie es die hohe Meßgenauigkeit von 0,1 % erfordert.

Deshalb schlägt die Erfindung eine Wägezelle mit integriertem Neigungsaufnehmer 4 vor, mit der jederzeit eine Neigung bzw. Schiefstellung der Wägezelle oder der Patientenliftwaage ermittelbar ist, bei der die Gewichtskraftrichtung von der Meßrichtung abweicht. Die Wägezelle 1 ist deshalb mit ihrer Kraftaufnahmeseite 6 als Kraftaufnahmeelement mit einem nicht dargestellten Tragrahmen verbunden, der sich direkt oder damit verbundene Waagenteilen auf einer Fußbodenfläche der medizinischen Einrichtung abstützt. Zur Gewährleistung der notwendigen Meßgenauigkeit von 0,1 % sind deshalb Abweichungen von der Waagerechten von höchstens 2° zulässig, um nicht eine besondere Ausrichtung der Waage vornehmen zu müssen.

Die Wägezelle 1 wird mit ihrer Kraftaufnahmeseite 6 durch zwei vertikale Schraubverbindungen an dem nicht dargestellten Tragrahmen befestigt. Dadurch erhält die Wägezelle 1 eine waagerechte Ausrichtung zur Abstützfläche, die bei Belastung auch durch eine Verwindung des Tragrahmens beeinträchtigt werden kann. Auch dadurch kann sich die Meßgenauigkeit durch eine zusätzliche Neigung der Wägezelle 1 verschlechtern. Zwischen den beiden Befestigungslöchern 14 für die Schraubverbindung ist die Ausnehmung 3 auf einer Fläche von ca. 20 x 30 mm und einer Tiefe von ca. 10 mm eingefräst, die parallel und waagerecht zur Einbaurichtung der Wägezelle 1 verläuft. In die Ausnehmung 3 ist eine elektronische Schaltplatine 2 eingepaßt, die waagerecht auf zwei seitlichen Auflagekanten 7 aufliegt. Die Schaltungsplatine 2 enthält im wesentlichen den mikroelektromechanischen Neigungsaufnehmer 4 und eine elektronische Rechenschaltung 5 als Neigungsaufnehmerschaltung, die im wesentlichen die Auswertung der Neigungserfassung ausführt. Dabei ist die Neigungsaufnehmerschaltung 5 auf der Schaltplatine 2 als Grenzwertschalter ausgebildet, der bei einer vertikalen Schiefstellung bzw. Neigung zur Schwerkraftrichtung ein Ausgangssignal in digitaler oder analoger Form erzeugt.

Eine Neigungsaufnehmer ist im Grunde aus der DE 100 62 296 C2 bekannt und arbeitet mit einer Referenzmasse, deren Abweichung von der Schwerkraftrichtung als ein elektrisches Signal ausgegeben wird. Die neuerdings bekannten Neigungsaufnehmer 4 in mikroelektromechanischer Bauweise bestehen aus kleinsten Massen, die wie kammartige Kondensatorplatten ineinandergreifen und bei einer Abweichung von ihrer Referenzlage eine Kapazitätsänderung bewirken, die proportional einer Beschleunigungswirkung ist. Diese Mikromechanik ist nebst Elektronik in einem Chip 4 als Neigungsaufnehmer von nur 7 x 7 x 3 mm integriert und werden allgemein als iMEMS (integrated Micro Elektro Mechanical Systems) bezeichnet. Diese erfordern eine Speisespannung von 5 V und einen Speisestrom von lediglich 5 mA und geben am Ausgang ein analoges oder digitales elektrisches Signal ab, das bei entsprechender Einbaulage der Winkelabweichung von der Schwerkraftrichtung proportional ist. Durch die waagerechte Lage in der Ausnehmung 3 der Wägezelle 1 ist der Neigungsaufnehmer 4 auf die gravimetrische Schwerkraftrichtung ausgerichtet und zeigt jede Abweichung davon als elektrisches Ausgangssignal an. Dies wird in der integrierten Elektronik des Chip 4 als Winkelwert zur Schwerkraftrichtung für beide Raumachsen ermittelt, so daß daraus eine dreidimensionale Schiefstellung bzw. Neigung im Raum ermittelbar ist. Der digitale Ausgang der integrierten Elektronik des Chip 4 kann auf einen vorgegebenen Neigungsgrenzwert programmiert werden, bei dessen Überschreiten ein Ausgangssignal ausgegeben wird.

Die Schaltungsplatine 2 ist über einen kleinen Leitungskanal 8 mit einer weiteren seitlichen Aussparung 9 verbunden, in der eine nicht dargestellte Meßsignalauswerteschaltung angeordnet wird. Zu dieser Meßsignalauswerteschaltung werden die auf den Biegebalken 12 als Verformungskörper angeordneten Dehnungsmeßstreifen 10 geführt und als Wheatstone'sche Brücke geschaltet. Der Kraftaufnahmeteil 6 des Doppelbiegebalkens 1 mit der Ausnehmung 3 für den Neigungsaufnehmer 4 ist in sich biegesteif und wird bei einer Belastung keiner Dehnungsbeanspruchung ausgesetzt. In axialer Richtung gegenüberliegend zum Kraftaufnahmeteil 6 ist ein Krafteinleitungsteil 11 als Krafteinleitungselement angeordnet, an dem der gewichtsbelastende Teil der Patientenliftwaage ebenfalls über zwei Schraubverbindungen befestigt wird. Eine derartige Patientenliftwaage ist nur mit einem einzigen Doppelbiegebalken 1 als Wägezelle ausgestattet, an der die gesamte Gewichtsbelastung angeordnet ist. Wird nun die Patientenliftwaage mit einem Gewicht belastet, entsteht im Biegebalken 12 als Verformungskörper eine Dehnung, die durch die Dehnungsmeßstreifen 10 als Gewichtskraftsignal F_{w} erfaßt und einer Meßsignalauswerteschaltung zugeführt wird.

In Fig. 2 der Zeichnung sind grafisch die Vektoren der vergleichbaren Gewichtskraftsanteile an einer schräggestellten Pendelstabwägezelle 13 dargestellt. Bei der Gewichtsbelastung einer Waage mit einer Pendelstab- 13 oder eine Doppelbiegebalkenwägezelle 1 entsteht in gravimetrischer Schwerkraftrichtung ein Gewichtskraftsignal von einer ermittelten Gewichtskraft F_{G}. Bei einer genauen Ausrichtung der Wägezelle 1, 13 in Meßrichtung erzeugt die Wägezelle 1, 13 ein Meßsignal von der Größe F_{w}, das der Gewichtskraft F_{G} entspricht. Weicht nun die Wägezelle 1, 13 in ihrer Ausrichtung von der Schwerkraftrichtung durch Schiefstellung bzw. Neigung ab, so bedingt dies eine Signalabweichung, weil die Richtung der Gewichtskraft nicht mehr mit der Meßrichtung in Wägezellenachsrichtung übereinstimmt, in der die Wägezelle 1, 13 kalibriert wurde.

Durch die Messung der Neigung der Wägezelle 1, 13 mittels eines mikroelektromechanischen zweiaxialen Neigungsaufnehmers 4, der durch die Anordnung auf der Schaltplatine 2 in der Wägezelle 1, 13 integriert ist, wird die Abweichung von der Meßrichtung erfaßt. Durch die in den Neigungsaufnehmer 4 integrierte Elektronik erhält man als Ausgangssignal ein digitales oder analoges Signal, das der Abweichung im Bezug zur Schwerkraftrichtung entspricht.

Zur Auswertung der Neigungsermittlung ist der Neigungsaufnehmer 4 auf der Schaltplatine 2 als Grenzwertschalter ausgebildet. Dazu wird eine höchstmögliche Neigung als Neigungsgrenzwert in mindestens einer der beiden Meßachsen durch eine trigonometrische Berechnung ermittelt. Dabei wird der Neigungswinkel aufgrund einer vorgegebenen maximalen Gewichtskraft F_{G} unter Berücksichtigung des höchstzulässigen Fehlers errechnet. Dieser ergibt sich dabei aus der Differenz zwischen der Gewichtskraft F_{G} und einer in Meßrichtung verlaufenden Gewichtskraft F_{w}. Da sich der aus der Neigung resultierende Winkelfehler aus dem Kräftedreieck der gemessenen Gewichtskraft F_{w}, der Gewichtskraft in Schwerkraftrichtung -F_{G} und der bei einer Neigung wirkenden Querkraft Fₕ ergibt, kann der Neigungsgrenzwinkel bereits nach den trigonometrischen Gleichungen aus der zulässigen Nennkraft der Wägezelle und der vorgegebenen Meßgenauigkeit von beispielsweise 0,1 % errechnet werden. Bei der Patientenliftwaage wurde dieser Fehler zur Berechnung eines Neigungsgrenzwertes verwandt, so daß die Schaltplatine 2 so ausgebildet ist, daß sie im Grunde einen Grenzwertschalter darstellt. Bei Überschreitung dieses vorgegebenen Grenzwertes der Neigung wird die Wägung abgebrochen und ein Neigungsfehler angezeigt, um die Messung an einer weniger geneigten Stelle zu wiederholen. Bei der Patientenliftwaage mit der vorgegebenen Meßgenauigkeit von 0,1 % wird bereits bei einer Neigung von 2° je Meßachse der Wägevorgang unterbrochen und ein Ausrichtfehler signalisiert.

Die Neigungsmessung kann aber auch direkt zur Korrektur bzw. Kompensation des Meßergebnisses F_{w} verwandt werden. Dazu wird in der Wägezelle 1, 13 noch eine weitere elektronische Schaltung vorgesehen, die mindestens zwei Kanäle und eine programmgesteuerte Rechenschaltung (CPO) aufweist, die aufgrund des Meßsignals F_{w} in Meßrichtung und der ermittelten zweiachsigen Neigungswinkel ein korrigiertes bzw. neigungskompensiertes Meßsignal -F_{G} errechnet, das der Gewichtskraft F_{G} entspricht. Eine derartige elektronische Schaltung könnte sowohl mit auf einer vergrößerten Schaltplatine 2 als auch zusätzlich in der seitlichen Aussparung 9 auf der Meßsignalauswerteschaltung vorgesehen werden.

Es ist auch denkbar, sowohl den Neigungsaufnehmer 4 als auch die zugehörigen Schaltungsteile der Schaltungsplatine 2 im Zwischenraum 15 zwischen den beiden Biegebalken 12 zu integrieren. Bei Pendelstabwägezellen 13 werden die Dehnungsmeßstreifen 10 häufig in verschweißbaren Bohrungen angeordnet, in denen gleichzeitig auch ein Neigungsaufnehmer 4 mit dessen Schaltplatine 3 integrierbar wäre.

Bei anderen Wägezellen könnte eine Integration der Neigungsaufnehmer 4 in den Krafteinleitungs- oder Kraftausleitungsteilen erfolgen, die meist die gleiche Richtung wie die Meßrichtung aufweisen und beibehalten. Die mit einem integrierten Neigungsaufnehmer 4 ausgestatteten Wägezellen 1, 13 liefern dann je nach bevorzugter Ausführung beispielsweise ein analoges nichtneigungskompensiertes Ausgangssignal und zusätzlich bei Überschreitung einer vorgegebenen Grenzneigung in einer oder in beiden Raumachsen ein digitales Ausgangssignal als Neigungsgrenzwert. Dieses digitale Grenzwertsignal kann dann zur Deaktivierung der Waage und zur Fehleranzeige sowohl bei allen ortsfesten als auch allen mobilen Waagen genutzt werden.

Bei Wägezellen 1, 13 mit einem analogen oder einem digitalen Ausgang können die Meßwerte am Ausgang aber auch neigungskömpensiert ausgegeben werden, wenn für die ermittelte Neigung bzw. Schrägstellung sogleich ein korrigiertes Meßsignal -F_{G} errechenbar ist. Dies kann aufgrund einer trigonometrischen Berechnungsweise direkt aus dem ermittelten Meßsignal F_{w} und des ermittelten Neigungswinkels α errechnet werden. Derartig neigungskompensierte Wägezellen 1, 13 liefern deshalb nicht nur bei Schrägstellung, sondern auch bei kurzzeitig auftretenden Verwindungen am Wägerahmen genaue Gewichtsergebnisse, so daß deren Einsatz auch an leichten Fahrzeugrahmen für den mobilen Einsatz möglich ist. Derartige neigungskompensierte Wägezellen 1, 13 müssen auch bei einem Austausch gegenüber defekten Wägezellen im Grunde nicht separat ausgerichtet und vor Ort justiert werden, so daß ein Austausch ohne aufwendige Montage- und Justagearbeiten möglich ist.

Bei Pendelstabwägezellen 13 verschiebt sich bei einer Schrägstellung bzw. Neigung sogleich auch der Krafteinleitungspunkt auf dem spärischen Krafteinleitungselement. Dies kann zu einem Meßfehler führen, da hiervon das Dehnungsfeld im Applikationsbereich der Dehnungsmeßstreifen beeinflußt wird. Zur Kompensation dieses Lasteinleitungsfehlers kann ein Meßkanal einer programmgesteuerten Rechenschaltung an eine weitere Dehnungsmeßstreifenapplikation angeschlossen werden, die dies veränderte Dehnungsfeld erfaßt und eine derartige unsymmetrische Lasteinleitung kompensiert. Ein derartiger Lasteinleitungsfehler kann empirisch je nach Ausführungstyp der Wägezelle 13 ermittelt und je nach Schiefstellung bzw. Neigung kompensiert werden.

Derartige neigungsermittelnde oder neigungskompensierende Wägezellen 1, 13 eignen sich vorzugsweise für den Einsatz in Patientenliftwaagen, da diese zur Erfassung von gewichtsabhängigen medizinischen Daten sehr genau sein müssen und auf unterschiedlichen:Aufstandsflächen mobil eingesetzt werden. Dabei ist oft bereits eine einfache Neigungsgrenzwertermittlung ausreichend, da die Wägung auf einfache Weise an anderer Stelle oder nach vorgenommener Ausrichtung wiederholbar ist. Der Einsatz von neigungskompensierenden Wägezellen 1, 13 ist insbesondere bei Aufbauverwiegungen vorteilhaft, da gerade bei Fahrzeugschrägstellungen und den im Fahrzeugbau üblichen Leichtbauweisen Verwindungen des Fahrzeugrahmens im. Grunde kaum vermeidbar sind, so daß alle Wägezellen 1, 13 unterschiedliche Neigungen zur Schwerkraftrichtung aufweisen können. Dabei kann es zusätzlich auch zweckmäßig sein, die Neigungskompensation mit einer Grenzwertabschaltung zu kombinieren, um in jedem Fall eine vorgegebene Meßgenauigkeit einhalten zu können. Dazu können die Grenzwertschalter in den Wägezellen 1, 13 auch dazu verwandt werden, Wägeeinrichtungen in verstellbaren Hubplattformen, wie beispielsweise bei Gabelstaplern oder anderen Hubeinrichtungen in eine neigungskorrigierte Lage zu steuern, in der dann die Meßrichtung mit der Schwerkraftrichtung übereinstimmt. Eine derartige Neigungskorrektur mittels neigungsaufnehmender Wägezellen 1, 13 kann auch mit einer Neigungskompensation kombiniert werden, soweit die Neigungskorrektur beispielsweise nur in einer Raumachse oder nur bei einzelnen Wägezellen 1, 13 möglich ist.

## Patentansprüche

1. Wägezelle mit Krafteinleitungs- und Kraftaufnahmeelementen (6) und mit einem dazwischen angeordneten Dehnungskörper (12), an dem Dehnungsmessstreifen (10) appliziert sind und in oder an einem der Wägezellenteile ein Neigungsaufnehmer (4) vorgesehen ist, der eine Abweichung der Messrichtung vcn der Schwerkraftrichtung erfasst, **dadurch gekennzeichnet, dass** der Neigungsaufnehmer (4) innerhalb der Krafteinleitungs- (11) oder Kraftaufnahmeelemente (6) oder dazwischen integriert angebracht ist, in mikroelektromechanischer Ausführung ausgebildet und auf einer Schaltungsplatine (2) angeordnet ist, wobei die Schaltungsplatine (2) innerhalb der vorgesehenen Wägezellenteile in definierter Ausrichtung befestigt ist.

2. Wägezelle nach Anspruch 1, **dadurch gekennzeichnet, dass** der Neigungsaufnehmer (4) in einer Bchrung, einer Ausnehmung (3) oder einem Zwischenraum innerhalb der Wägezellenteile befestigt ist.

3. Wägezelle nach Anspruch 1 oder 2, **dadurch gekennzeichnet, dass** der mikroelektromechanische Neigungsaufnehmer (4) mit einer Elektronik auf einem einzigen Chip integriert ist.

4. Mägezelle nach einem der vorhergehenden Ansprüche, **dadurch gekennzeichnet, dass** der Neigungsaufnehmer (4) mit einer zusätzlichen elektronischen Rechenschaltung (5) auf einer Schaltungsplatine (2) angeordnet ist, die aus dem ermittelten Neigungswinkel in Bezug zur Schwerkraftrichtung und einem vorgegebenden Neigungsgrenzwert bei dessen Überschreitung ein analoges oder digitales Ausgangsignal liefert, das zur Unterbrechung des Wägevorgangs und/oder zur Anzeige der Neigungsüberschreitung dient.

5. Wägezelle nach einem der vorhergehenden Ansprüche, **dadurch gekennzeichnet, dass** der Neigungsaufnehmer (4) mit einer Messsignalauswerteschaltung der Wägezelle (1) verbunden ist und mit Hilfe einer elektronischen Schaltung aus dem ermittelten Neigungswinkel und den erfassten Gewichtskraftsignalen F_{w} ein neigungskompensiertes Gewichtssignal -F_{G} bildet, das der Gewichtskraft F_{G} in Schwerkraftrichtung entspricht.

6. Wägezelle nach einem der vorhergehenden Ansprüche, **dadurch gekennzeichnet, dass** der Neigungsaufnehmer (4) in einer Ausnehmung (3) eines Kraftaufnahmeelements (6) eines Dcppelbiegebalkens (1) auf einer Schaltplatine (2) angebracht ist, die bei Überschreitung eines vorgegebenen Neigungsgrenzwertes in wenigstens einer Raumachse den Wägevorgang abbricht und/oder die Überschreitung des Neigungsgrenzwertes signalisiert.

7. Wägezelle nach einem der Ansprüche 1 bis 5, **dadurch gekennzeichnet, dass** diese als Pendelstabwägezelle (13) ausgebildet ist, die eine Messsignalauswerteschaltung enthält, die aus dem ermittelten Neigungswinkel und einer zusätzlichen Dehnungsmessstreifenappikation einen Lasteinleitungsfehler ermittelt und zusätzlich zur ermittelten Neigung kompensiert.

8. Waage mit mindestens einer Wägezelle (1) nach einem der Ansprüche 1 bis 7, **dadurch gekennzeichnet, dass** mit Hilfe einer elektronischen Rechenschaltung (5) bei Überschreitung einer vorgegebenen Grenzneigung in wenigstens einer Raumachsen der Wägevorgang unterbrochen und/oder die Neigungsüberschreitung signalisiert wird, oder mit Hilfe einer Messsignalauswerteschaltung aus dem ermittelten Neigungswinkel und den erfaßten Gewichtskraftsignalen F_{w} ein neigungskompensierter Gewichtswert F_{G} gebildet wird.

9. Waage nach Anspruch 8, **dadurch gekennzeichnet, dass** zur Aufbauverwiegung von Fahrzeugen, bei der zwischen einem Fahrzeugrahmen und einen die Ladung aufnehmenden Aufbau mehrere Wägezellen (1) vorgesehen sind, die das Ladegewicht erfassen, wobei alle Wägezellen integrierten Neigungsaufnehmer (4) aufweisen, die aus den einzelnen Neigungswinkeln und den zugehörigen Kraftmesswerten F_{w} ein neigungskompensiertes Gewichtssignal -F_{G} bilden und/oder bei Überschreitung eines vorgegebenen Neigungswinkels den Wägevorgang abbrechen.

10. Waage nach einem der Ansprüche 8 oder 9, **dadurch gekennzeichnet, daß** mit Hilfe der ermittelten Neigung in einer oder mehreren neigungsintegrierten Wägezellen (1, 13) die Lage der Waage oder deren Wägefläche so einstellbar ist, daß diese in mindestens einer Raumachse waagerecht oder in Schwerkraftrichtung ausgerichtet ist.

## Claims

1. Load cell with force application and force take-up elements (6) and with an expansion body (12) arranged therebetween, to which strain gauges (10) are applied and an inclination transducer (4) is provided in or on one of the load cell parts, which detects a deviation of the direction of measurement from the direction of gravity, **characterised in that** the inclination transducer (4) is mounted inside the force application (11) or force take-up elements (6) or is integrated therebetween, is configured in micro-electromagnetic form and is arranged on a circuit board (2), wherein the circuit board (2) is fastened inside the provided load cell parts in defined orientation.

2. Load cell according to claim 1, **characterised in that** the inclination transducer (4) is fastened in a bore, a recess (3) or an interstice inside the load cell parts.

3. Load cell according to claim 1 or 2, **characterised in that** the micro-electromechanical inclination transducer (4) is integrated with an electronics system on a single chip.

4. Load cell according to one of the preceding claims, **characterised in that** the inclination transducer (4) is arranged with an additional electronic computing circuit (5) on a circuit board (2), which from the determined angle of inclination in relation to the direction of gravity and a predetermined inclination limit value supplies an analog or digital output signal when said limit value is exceeded, said output signal serving to interrupt the weighing process and/or to indicate that the inclination has been exceeded.

5. Load cell according to one of the preceding claims, **characterised in that** the inclination transducer (4) is connected to a measurement signal evaluation circuit of the load cell (1) and by means of an electronic circuit forms, from the determined angle of inclination and the detected weight signals F_{W}, an inclination-compensated weight signal -F_{G}, which corresponds to the weight F_{G} in the direction of gravity.

6. Load cell according to one of the preceding claims, **characterised in that** the inclination transducer (4) is mounted in a recess (3) of a force take-up element (6) of a double bending beam (1) on a circuit board (2), which terminates the weighing process when a predetermined inclination limit value is exceeded in at least one spatial axis and/or indicates that the inclination limit value has been exceeded.

7. Load cell according to one of claims 1 to 5, **characterised in that** this is configured as a suspension bar load cell (13), which contains a measurement signal evaluation circuit, which determines a load application error from the determined angle of inclination and an additional strain gauge application and compensates said error in addition to the determined inclination.

8. Weighing machine with at least one load cell (1) according to one of claims 1 to 7, **characterised in that** the weighing process is terminated by means of an electronic computing circuit (5) when a predetermined inclination limit is exceeded in at least one spatial axis and/or it is indicated that the inclination has been exceeded, or an inclination-compensated weight value F_{G} is formed from the determined angle of inclination and the detected weight signals F_{W} by means of a measurement signal evaluation signal.

9. Weighing machine according to claim 8, **characterised in that** for weighing the structure of motor vehicles, in which between a vehicle frame and a structure receiving the load a plurality of load cells (1) are provided, which detect the loading weight, wherein all the load cells have integrated inclination transducers (4), which form an inclination-compensated weight signal -F_{G} from the individual angles of inclination and the associated measured force values F_{W} and/or terminate the weighing process when a predetermined angle of inclination is exceeded.

10. Weighing machine according to one of claims 8 or 9, **characterised in that** by means of the determined inclination in one or more inclination-integrated load cells (1, 13), the position of the weighing machine or the weighing surface thereof is adjustable so that it is oriented horizontally or in the direction of gravity in at least one spatial axis.

## Revendications

1. Cellule de pesage, comportant des éléments d'introduction de force et de réception de force (6) et un corps de dilatation (12), qui est disposé entre ceux-ci et sur lequel sont appliquées des jauges de contrainte (10), et il est prévu dans ou sur l'une des parties de la cellule de pesage un détecteur d'inclinaison (4), qui enregistre une divergence de la direction de mesure par rapport à la direction de la force de gravité, **caractérisée en ce que** le détecteur d'inclinaison (4) est intégré à l'intérieur des éléments d'introduction de force et de réception de force (6) ou est disposé entre ceux-ci, est conçu selon une réalisation micro-électromécanique et est disposé dans une plaquette de circuits imprimés (2), ladite plaquette de circuits imprimés (2) étant fixée dans une orientation définie à l'intérieur des parties prévues de la cellule de pesage.

2. Cellule de pesage selon la revendication 1, **caractérisée en ce que** le détecteur d'inclinaison (4) est fixé dans une forure, un évidement (3) ou un espace intermédiaire à l'intérieur des parties de la cellule de pesage.

3. Cellule de pesage selon la revendication 1 ou 2, **caractérisée en ce que** le détecteur d'inclinaison (4) micro-électromécanique est intégré avec une électronique sur une seule puce.

4. Cellule de pesage selon l'une quelconque des revendications précédentes, **caractérisée en ce que** le détecteur d'inclinaison (4) est disposé avec un circuit de calcul (5) électronique supplémentaire sur une plaquette de circuits imprimés (2), qui, à partir de l'angle d'inclinaison calculé par rapport à la direction de la force de gravité et d'une valeur d'inclinaison limite prédéfinie, délivre un signal de sortie analogique ou numérique, qui est destiné à interrompre le processus de pesage et/ou à afficher le franchissement de la valeur d'inclinaison.

5. Cellule de pesage selon l'une quelconque des revendications précédentes, **caractérisée en ce que** le détecteur d'inclinaison (4) est relié à un circuit d'analyse du signal de mesure de la cellule de pesage (1) et, à l'aide d'un circuit électronique, forme à partir de l'angle d'inclinaison calculé et des signaux de poids F_{W} enregistrés un signal de poids -F_{G} compensé en inclinaison, qui correspond au poids F_{G} dans la direction de la force de gravité.

6. Cellule de pesage selon l'une quelconque des revendications précédentes, **caractérisée en ce que** le détecteur d'inclinaison (4) est disposé dans un évidement (3) d'un élément de réception de force (6) d'un fléau à double flexion (1) sur une plaquette de circuits imprimés (2) qui, en présence d'une valeur supérieure à une valeur d'inclinaison limite prédéfinie dans au moins un axe dans l'espace, interrompt le processus de pesage et/ou signale le franchissement de la valeur d'inclinaison limite.

7. Cellule de pesage selon l'une quelconque des revendications 1 à 5, **caractérisée en ce que** celle-ci est réalisée sous la forme d'une cellule de pesage à balancier (13), qui comporte un circuit d'analyse du signal de mesure qui, à partir de l'angle d'inclinaison calculé et d'une application supplémentaire d'une jauge de contrainte, détermine une erreur d'introduction de force et la compense en plus de l'inclinaison calculée.

8. Balance comportant au moins une cellule de pesage (1) selon l'une quelconque des revendications 1 à 7, **caractérisée en ce que**, en cas de franchissement d'une inclinaison limite prédéfinie dans au moins un axe dans l'espace, le processus de pesage est interrompu et/ou le franchissement de l'inclinaison limite est signalé au moyen d'un circuit de calcul (5) électronique, ou une valeur de poids F_{G} compensée en inclinaison est formée au moyen d'un circuit d'analyse du signal de mesure à partir de l'angle d'inclinaison calculé et des signaux de poids F_{W} enregistrés.

9. Balance selon la revendication 8, **caractérisée en ce que**, pour le pesage des plates-formes carrossées de véhicules, pour lequel il est prévu, entre un bâti de véhicule et une plate-forme carrossée destinée à recevoir le chargement, plusieurs cellules de pesage (1) qui enregistrent le poids de la charge, sachant que toutes les cellules de pesage comportent des détecteurs d'inclinaison (4) intégrés qui, à partir des différents angles d'inclinaison et des valeurs de mesure de force F_{W} associées, forment un signal de poids -F_{G} compensé en inclinaison et/ou interrompent le processus de pesage en présence d'une valeur supérieure à l'angle d'inclinaison prédéfini.

10. Balance selon la revendication 8 ou 9, **caractérisée en ce que**, au moyen de l'inclinaison calculée dans une ou plusieurs cellules de pesage (1, 13) intégrées dans l'inclinaison, la position de la balance ou la surface de pesage de celle-ci peut être ajustée de telle sorte que celle-ci est horizontale dans au moins un axe dans l'espace ou est orientée dans la direction de la force de gravité.
